# EUROPEAN PATENT SPECIFICATION

(11) **EP 3 639 996 B1**
(45) Date of publication and mention of the grant of the patent: **06.09.2023**
(21) Application number: 18816810.8
(22) Date of filing: 07.06.2018
(51) Int. Cl.: B29C 43/18, B29C 43/20, B29C 70/18, B29C 70/20, B29C 70/22, C08J 5/24, B29C 65/50

(54) **METHOD FOR MANUFACTURING COMPOSITE LAMINATE, METHOD FOR MANUFACTURING FIBER-REINFORCED COMPOSITE MATERIAL MOLDED ARTICLE, COMPOSITE LAMINATE AND FIBER-REINFORCED COMPOSITE MATERIAL MOLDED ARTICLE**
VERFAHREN ZUR HERSTELLUNG EINES VERBUNDLAMINIERTEN KÖRPERS, VERFAHREN ZUR HERSTELLUNG EINES FASERVERSTÄRKTEN VERBUNDMATERIALFORMARTIKELS, VERBUNDLAMINIERTEN KÖRPER UND FASERVERSTÄRKTER VERBUNDMATERIALFORMARTIKEL
PROCÉDÉ DE FABRICATION D'UN STRATIFIÉ COMPOSITE, PROCÉDÉ DE FABRICATION D'UN ARTICLE MOULÉ EN MATÉRIAU COMPOSITE RENFORCÉ PAR DES FIBRES, STRATIFIÉ COMPOSITE ET ARTICLE MOULÉ EN MATÉRIAU COMPOSITE RENFORCÉ PAR DES FIBRES

(30) Priority: 14.06.2017 JP 2017116621
(43) Date of publication of application: 22.04.2020
(73) Proprietor: Mitsubishi Chemical Corporation, Tokyo 100-8251 (JP)
(72) Inventor: IKEDA Kazuhisa, Tokyo 100-8251 (JP); FURUHASHI Yuma, Tokyo 100-8251 (JP); HIRAKAWA Daiki, Tokyo 100-8251 (JP)
(74) Representative: Hoffmann Eitle
(86) International application number: PCT/JP2018/021861
(87) International publication number: WO 2018/230432

(56) References cited:
- EP-A1- 2 127 840
- WO-A1-2015/022174
- DE-A1-102014 221 356
- JP-A- S5 577 527
- JP-A- 2005 324 340
- JP-A- 2008 266 373
- JP-A- 2010 076 373
- JP-A- 2015 178 241

## Description

### [Technical Field]

The present invention relates to a method of producing a composite laminate, a composite laminate, a method of producing a fiber-reinforced composite material molded product, and a fiber-reinforced composite material molded product.

### [Background Art]

In recent years, regarding members for sports, automobiles, aircrafts, industrial applications, and the like, fiber-reinforced composite material molded products using a carbon fiber-reinforced plastic (CFRP) have been proposed and particularly actively used in the field in which low weight and improved mechanical properties are required.

Regarding a method of producing a fiber-reinforced composite material molded product, for example, a method in which a laminate in which sheet-like prepregs obtained by impregnating an uncured matrix resin composition into reinforcing fibers are laminated is heated in a molding die and pressed, and a fiber-reinforced composite material molded product having a predetermined shape is obtained is known. In addition, a method in which, when a fiber-reinforced composite material molded product having a three-dimensional shape is produced, before main molding, a laminate is pre-molded into a predetermined shape in consideration of the shape of the final molded product to form a preform is also known. However, it is difficult to produce a fiber-reinforced composite material molded product having a complex shape having ribs, bosses, and the like simply using a prepreg.

Regarding a method of producing a fiber-reinforced composite material molded product having ribs, bosses, and the like, for example, a method using a composite laminate in which a sheet molding compound (SMC) and a prepreg are laminated is known. For example, a method in which a nonwoven prepreg is laminated on an SMC, and pressed and heated to obtain a fiber-reinforced composite material molded product may be exemplified (Patent Literature 1 to 3).

DE 10 2014 221 356 A1 refers to an assembly having individual components made of a fibre-reinforced composite material. The assembly comprises a plurality of individual components composed of a fibre-reinforced composite material. An edge section of at least one individual component is sealed by means of a sealing tape which contains reinforcing fibres and a curable plastics material.

WO 2015/022174 A1 refers to a method for producing a component from organic sheets. The method may comprise placing a first organic sheet and a second organic sheet next to one another to form a component preform, forming at least one overlapping joining zone by tacking the first and second organic sheets together with a connecting part in the form of a third organic sheet, transferring the component preform to a joining tool, using the joining tool to form a joined component by connecting the organic sheets through melting and compression in the overlapping joining zone, and consolidating the joined component at least in the zone of the overlapping joining zone.

EP 2 127 840 A1 refers to a prepreg base material, a layered base material, a fiber-reinforced plastic, a process for producing prepreg base material, and a process for producing fiber-reinforced plastic. The prepreg base material includes reinforcing fibers arranged substantially in one direction and a matrix resin between the reinforcing fibers, wherein the prepreg base material has substantially throughout its entire surface incisions, each incision extending in a direction substantially crossing the reinforcing fibers, wherein substantially all of the reinforcing fibers are divided by the incisions, a length of each of reinforcing fiber segments formed by the incisions is in the range of 10 to 100 mm, a thickness H of the prepreg base material is in the range of 30 to 300 mum, and a fiber volume content by Vf of the reinforcing fibers is in the range of 45 to 65%.

### [Citation List]

### [Patent Literature]

[Patent Literature 1]
   Japanese Unexamined Patent Application, First Publication No. 2007-1298
[Patent Literature 2]
   Japanese Unexamined Patent Application, First Publication No. 2006-7492
[Patent Literature 3]
   Japanese Unexamined Patent Application, First Publication No. H10-67026

### [Summary of Invention]

### [Technical Problem]

However, also in methods of Patent Literature 1 to 3, it is difficult to obtain a fiber-reinforced composite material molded product having a complex 3D shape having a curved surface (including a combination of a plurality of planes) that is not a developable surface because of molding limitations of a prepreg.

The present invention provides inter alia a method of producing a composite laminate and a method of producing a fiber-reinforced composite material molded product through which it is possible to produce a fiber-reinforced composite material molded product having a complex shape and a fiber-reinforced resin molded article which has excellent appearance and strength and is reinforced with continuous reinforcing fibers and discontinuous reinforcing fibers.

### [Solution to Problem]

The present invention relates to a method of producing a composite laminate, as defined in claim 1. The method of producing a composite laminate comprises:
preparing an assembly having at least one of an abutment part in which a first end of a first sheet-like prepreg comprising reinforcing fibers which are continuous fibers and a second end of a second sheet-like prepreg comprising reinforcing fibers which are continuous fibers are abutted so that end surfaces of the first end and the second end come in contact with each other and an overlapping part in which a first end of a first sheet-like prepreg comprising reinforcing fibers which are continuous fibers and a second end of a second sheet-like prepreg comprising reinforcing fibers which are continuous fibers overlap so that the end surfaces of the first end and the second end face the opposite direction each other.

The method satisfies one of (i) and (ii):
(i) the assembly has an abutment part, the method further comprising laminating a sheet molding compound on the assembly so that a first portion in which the sheet molding compound and the abutment part overlap is formed, and each of the edge shape of the first end of the first sheet-like prepreg and the edge shape of the second end of the second sheet-like prepreg in a plan view is an arc shape in the first portion, and
(ii) the assembly has an overlapping part, the method further comprising laminating a sheet molding compound on the assembly so that a second portion in which the sheet molding compound and the overlapping part overlap is formed, and each of the edge shape of the first end of the first sheet-like prepreg and the edge shape of the second end of the second sheet-like prepreg in a plan view is an arc shape in the second portion.

In the method of producing a composite laminate,
the assembly may have an abutment part, and the end surface of the first end of the first sheet-like prepreg and the end surface of the second end of the second sheet-like prepreg in the first portion may be curved surfaces that are complementary to each other.

In the method of producing a composite laminate,
the assembly may have an overlapping part, and the width of a part in which the first end of the first sheet-like prepreg and the second end of the second sheet-like prepreg overlap may be 5 to 40 mm.

In the method of producing a composite laminate,
each of the edge shape of the first end of the first sheet-like prepreg and the edge shape of the second end of the second sheet-like prepreg in a plan view may be an arc shape.

Preferably, the diameter R of the arc is 90 mm or more.

The distance b (mm) between both ends of the arc and the diameter R may satisfy the relationship of R/b≥1.

In the method of producing a composite laminate,
each of the first sheet-like prepreg and the second sheet-like prepreg may be a laminate consisting of two or more sheet-like prepregs.

In the method of producing a composite laminate,
the preparation of the assembly may be conducted by combining the first sheet-like prepreg and the second sheet-like prepreg, after each of the first sheet-like prepreg and the second sheet-like prepreg is pre-molded.

In the method of producing a composite laminate,
regarding each of the first sheet-like prepreg and the second sheet-like prepreg, a UD prepreg in which reinforcing fibers are aligned in one direction may be used.

In the method of producing a composite laminate,
regarding each of the first sheet-like prepreg and the second sheet-like prepreg, a cross prepreg in which reinforcing fiber are woven orthogonally may be used.

The present invention also relates to a method of producing a fiber-reinforced composite material molded product, as defined in claim 11. The method of producing a fiber-reinforced composite material molded product comprises
using the above described method of producing a composite laminate to produce a composite laminate and compression molding said composite laminate in a molding die to obtain a fiber-reinforced composite material molded product.

Further, the present invention relates to a composite laminate, as defined in claim 12. The composite laminate is produced by the above described method of producing a composite laminate.

Still further, the present invention relates to a fiber-reinforced composite material molded product, as defined in claim 13. The fiber-reinforced composite material molded product is obtained by compression molding the above described composite laminate in a molding die.

### [Advantageous Effects of Invention]

According to the present invention, it is possible to provide a composite laminate that is used to produce a fiber-reinforced composite material molded product having a complex shape and a fiber-reinforced composite material molded product having excellent appearance and mechanical characteristics and having a complex shape.

### [Brief Description of Drawings]

Fig. 1A is a perspective view showing an example of a fiber-reinforced composite material molded product of the present invention.
Fig. 1B is a plan view of an example of the fiber-reinforced composite material molded product of the present invention shown in Fig. 1A.
Fig. 2A is a plan view showing an example of a prepreg used in a method of producing a composite laminate of the present invention.
Fig. 2B is a plan view showing an example of a prepreg used in the method of producing a composite laminate of the present invention.
Fig. 3 is a perspective view showing a laminate in which the prepregs in Fig. 2 are laminated.
Fig. 4A is a plan view showing an example of a prepreg used in the method of producing a composite laminate of the present invention.
Fig. 4B is a plan view showing an example of a prepreg used in the method of producing a composite laminate of the present invention.
Fig. 5 is a perspective view showing a laminate in which the prepregs in Fig. 4 are laminated.
Fig. 6 is a perspective view showing an assembly in which the laminate in Fig. 3 and the laminate in Fig. 5 are combined.
Fig. 7A is a plan view showing the assembly in Fig. 6.
Fig. 7B is a cross-sectional view taken along the line A-A in Fig. 7A.
Fig. 8 is a plan view showing a composite laminate in which SMC is laminated on the assembly in Fig. 6.
Fig. 9 is a cross-sectional view showing another example of an assembly formed by the production method of the present invention.
Fig. 10A is a perspective view showing another example of the laminate.
Fig. 10B is a perspective view showing another example of the assembly.
Fig. 11 is a schematic view illustrating a method of measuring a meandering angle of a reinforcing fiber.
Fig. 12A is a plan view showing a comparative example of a prepreg used in the method of producing a composite laminate.
Fig. 12B is a plan view showing a comparative example of a prepreg used in the method of producing a composite laminate.
Fig. 13A is a plan view showing a comparative example of a prepreg used in the method of producing a composite laminate.
Fig. 13B is a plan view showing a comparative example of a prepreg used in the method of producing a composite laminate.
Fig. 14A is a plan view showing a comparative example of a prepreg used in the method of producing a composite laminate.
Fig. 14B is a plan view showing a comparative example of a prepreg used in the method of producing a composite laminate.
Fig. 15A is a plan view showing a comparative example of a prepreg used in the method of producing a composite laminate.
Fig. 15B is a plan view showing a comparative example of a prepreg used in the method of producing a composite laminate.
Fig. 16 is a diagram showing the shape of one side of an example of the prepreg shown in Fig. 12A, Fig. 12B, Fig. 13A, and Fig. 13B.
Fig. 17 is a diagram showing the shape of one side of an example of the prepreg shown in Fig. 14A, Fig. 14B, Fig. 15A, and Fig. 15B.

### [Description of Embodiments]

Sizes and the like in the drawings exemplified in the following description are examples, and the present invention is not necessarily limited thereto, and can be appropriately changed and implemented within the scope of the appended claims.

### [Method of producing a composite laminate]

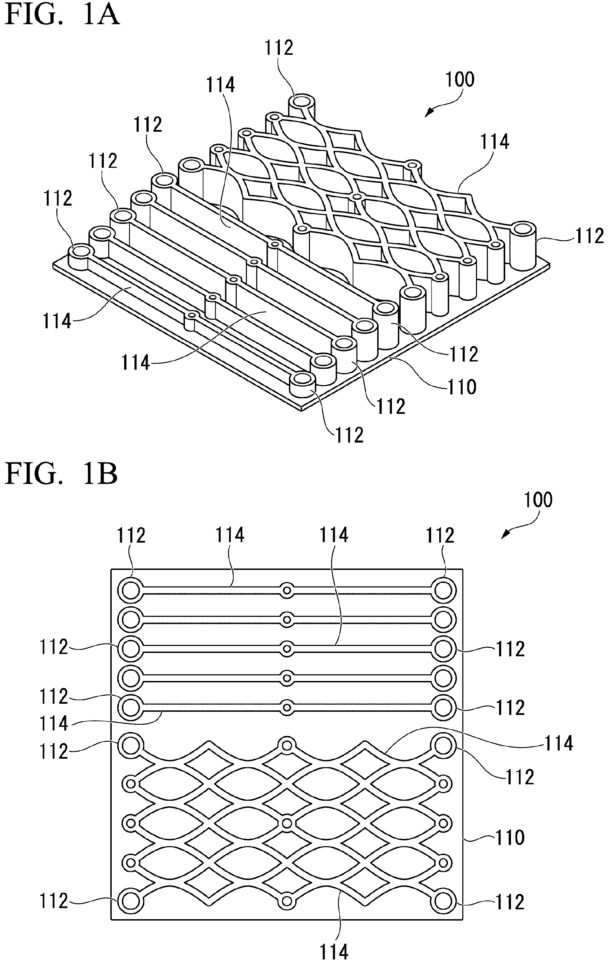

A composite laminate obtained by a method of producing a composite laminate of the present invention is used to produce a fiber-reinforced composite material molded product (hereinafter simply referred to as a "molded product"). In the method of producing a composite laminate of the present invention, it is possible to obtain a composite laminate that can be suitably used for producing a molded product having a complex shape having ribs and bosses, for example, like a fiber-reinforced composite material molded product 100 exemplified in Fig. 1(A) and Fig. 1(B).

The fiber-reinforced composite material molded product 100 includes a substrate 110 having a square shape in a plan view, a plurality of bosses 112 provided along two opposing sides of the upper surface of the substrate 110, and a plurality of plate-like ribs 114 that are formed to connect the bosses 112 corresponding to respective sides.

Here, a molded product produced using a composite laminate obtained in the method of producing a composite laminate of the present invention is not limited to the fiber-reinforced composite material molded product 100.

### (First aspect)

A method of producing a composite laminate according to a first aspect of the present invention is a method in which a sheet molding compound (hereinafter referred to as an "SMC") is laminated on at least a part of an abutment part of an assembly having an abutment part in which ends of sheet-like prepregs are abutted so that they come in contact with each other in an overlapping manner, and thereby a composite laminate is obtained.

Regarding a specific aspect, a method in which ends of a plurality of laminates in which sheet-like prepregs are laminated are abutted so that side end surfaces come in contact with each other to form an assembly, and an SMC is laminated on a part in which ends of the assembly are abutted in an overlapping manner, and thereby a composite laminate is obtained may be exemplified.

Here, in the abutment part, side end surfaces may be in contact with each other, or a slight gap may be provided between side end surfaces. However, since the appearance and strength of the molded product produced using this composite laminate tend to become excellent, at least parts of the side end surfaces are preferably in contact with each other in the abutment part.

In this manner, in the present invention, the 3D shape of a desired molded product is divided into several parts, prepregs or prepreg laminates are combined to form an assembly for respective parts and laminated so that an SMC overlaps the abutment part, and thereby a composite laminate is obtained. It is also possible to produce a molded product having a complex 3D shape having a curved surface (including a combination of a plurality of planes) that is not a developable surface using such a composite laminate.

In the method of producing a composite laminate according to the first aspect of the present invention, in the assembly, preferably, an end of the prepregs of at least a part of the abutment part is in a curved shape in a plan view, and more preferably, side end surfaces of at least a part of respective abutted prepregs are curved surfaces that are complementary to each other.

In addition, in the assembly, preferably, side end surfaces of abutting ends of adjacent laminates are curved surfaces which have a curved shape in a plan view and are complementary to each other.

It is possible to produce a molded product having excellent appearance and strength and having a complex 3D shape using such a composite laminate, and meandering of reinforcing fibers during compression molding is restricted.

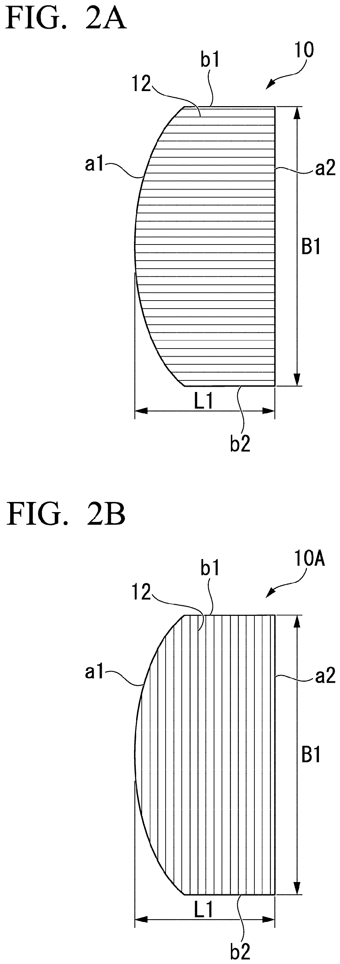

An example of the method of producing a composite laminate according to the first aspect of the present invention will be described below with reference to Figs. 2 to 8. The method of producing a composite laminate of the present embodiment includes the following processes (i) to (iii).
(i) laminating sheet-like prepregs to form a prepreg laminate (sheet-like prepregs are laminated to form a laminate)
(ii) combining laminates to form an assembly (laminates are combined to form an assembly)
(iii) laminating the assembly and an SMC to form a composite laminate (the assembly and an SMC are laminated to form a composite laminate)

### Process (i):

In order to form a laminate which forms an assembly, a sheet-like prepreg including reinforcing fibers which are continuous fibers and a matrix resin composition is used. Specifically, a prepreg in which a matrix resin composition is impregnated into a reinforcing fiber sheet formed of reinforcing fibers which are continuous fibers is used.

Exemplary forms of prepregs include a UD prepreg in which reinforcing fibers are aligned in one direction, a cross prepreg in which reinforcing fibers are woven orthogonally, and a nonwoven prepreg. In addition, prepregs using a reinforcing fiber cloth as a reinforcing fiber sheet such as a bias cloth, a tri-axial cloth and Multi-axial Warp Knit may be exemplified. Among these, regarding the prepreg, a UD prepreg and a cross prepreg are preferable because they are made of continuous fibers having favorable mechanical properties. One type of prepreg may be used alone, or two or more types thereof may be used in combination.

Continuous fibers are reinforcing fibers having a longer fiber length than short fibers to be described below.

Examples of reinforcing fibers include carbon fibers, glass fibers, aramid fibers, high-strength polyester fibers, boron fibers, alumina fibers, silicon nitride fibers, and nylon fibers. Among these, carbon fibers are preferable because they have excellent specific strength and specific elasticity. One type of reinforcing fibers may be used alone or two or more types thereof may be used in combination.

Examples of matrix resin compositions include resin compositions containing one or more of an epoxy resin, an unsaturated polyester resin, an acrylic resin, a vinyl ester resin, a phenolic resin, and a benzoxazine resin. Among these, a resin composition containing an epoxy resin is preferable because then the strength after curing can be increased.

Auxiliary agents such as a curing agent, a curing accelerator, a thickener, a polymerization initiator and an inorganic filler may be added to the matrix resin composition as necessary.

In Process (i), regarding a prepreg used for a laminate which forms an assembly, a plurality of prepregs in which an edge shape of a side end in a plan view combined with another laminate preferably has a curved shape are produced. Then, the plurality of prepregs are laminated to form a plurality of laminates for forming an assembly. Preferably, side end surfaces of abutting ends of adjacent laminates are curved surfaces which have a curved shape in a plan view and are complementary to each other.

The shape of the side end surface of the abutting end of the laminate in a plan view is preferably a curved shape, and examples thereof include an arc shape and a wave shape. That is, preferable examples of the form of the side end surface of the abutting end of the laminate include an arc-shaped curved surface in a plan view and a wave-like curved surface in a plan view.

In order to easily restrict meandering of reinforcing fibers, the side end surface of the abutting end of the laminate is preferably an arc-shaped curved surface in a plan view, and more preferably an arc-shaped curved surface which forms a part of a perfect circular circumference in a plan view.

When the shape of the side end surface of the abutting end of the laminate is an arc shape in a plan view, the diameter R of the arc can be appropriately set according to a size of a desired molded product and the like. The diameter R of the arc is preferably 90 mm or more, more preferably 100 to 2,000 mm, and most preferably 150 to 1,000 mm. When the diameter R of the arc is set in the above range, the occurrence of meandering of reinforcing fibers is reduced and the appearance of the molded product tends to become favorable.

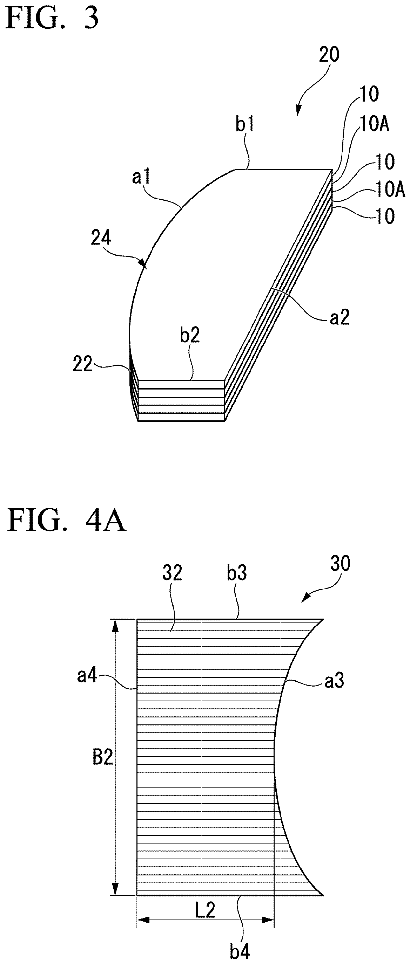

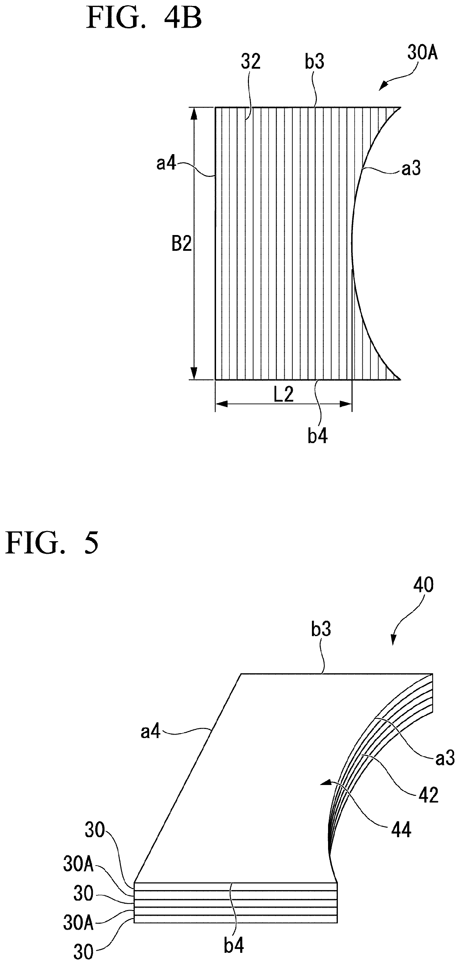

Specifically, for example, the sheet-like prepreg may be cut to produce a prepreg 10 shown in Fig. 2A and a prepreg 10A shown in Fig. 2B. In addition, the sheet-like prepreg may be cut to produce a prepreg 30 shown in Fig. 4A and a prepreg 30A shown in Fig. 4B.

The shape of the prepreg 10 in a plan view has an arc-shaped side a1, a linear side a2 that faces the side a1, and linear sides b1 and b2 connecting both ends of the side a1 and the side a2, and has a shape in which one side a1 of a rectangle is convex in an arc shape. In the length direction of the side a2, the position of the apex of the side a1 corresponds to the position at the middle point on the side a2. The side b1 and the side b2 are parallel to each other. In the prepreg 10, the fiber direction of reinforcing fibers 12 is a direction perpendicular to the length direction of the side a2.

The prepreg 10 and the prepreg 10A in this example have the same shape and the same size. In the prepreg 10A, the fiber direction of the reinforcing fibers 12 is parallel to the length direction of the side a2.

Here, the fiber direction of reinforcing fibers 12 in the prepregs 10 and 10A is not limited to a direction parallel to the length direction of the side a2 and a direction may be perpendicular to the length direction of the side a2, and for example, the fiber direction may be at 45° with respect to the length direction of the side a2.

The shape of the prepreg 30 in a plan view has an arc-shaped side a3, a linear side a4 that faces the side a3, and linear sides b3 and b4 connecting both ends of the side a3 and the side a4, and has a shape in which one side a3 of a rectangle is concave in an arc shape. In the length direction of the side a4, the position of the apex of the side a3 corresponds to the position at the middle point on the side a4. The side b3 and the side b4 are parallel to each other. In the prepreg 30, the fiber direction of reinforcing fibers 32 is a direction perpendicular to the length direction of the side a4.

The prepreg 30 and the prepreg 30A in this example have the same shape and the same size. In the prepreg 30A, the fiber direction of the reinforcing fibers 32 is parallel to the length direction of the side a4.

Here, the fiber direction of the reinforcing fibers 32 in the prepregs 30 and 30A is not limited to a direction parallel to the length direction of the side a4 and a direction perpendicular to the length direction of the side a4, and for example, the fiber direction may be at 45° with respect to the length direction of the side a4.

For example, as shown in Fig. 3, the prepreg 10 and the prepreg 10A are laminated in a lamination structure of the prepreg 10/the prepreg 10A/the prepreg 10/the prepreg 10A/the prepreg 10 from the bottom to form a laminate 20. In addition, as shown in Fig. 5, the prepreg 30 and the prepreg 30A are laminated in a lamination structure of the prepreg 30/the prepreg 30A/the prepreg 30/the prepreg 30A/the prepreg 30 from the bottom to form a laminate 40.

The edge shape of the side a1 of the prepregs 10 and 10A and the edge shape of the side a3 of the prepregs 30 and 30A have corresponding arc shapes and are complementary to each other. Therefore, a side end surface 22 on the side a1 of the prepregs 10 and 10A in the laminate 20 and a side end surface 42 on the side a3 of the prepregs 30 and 30A in the laminate 40 are curved surfaces which have arc shapes in a plan view and are complementary to each other.

Here, the lamination structures of the prepregs in the laminates are not limited to the above configurations. For example, the number of laminated layers of the prepreg may be four or less, or six or more. In addition, the number of types of prepregs used in the laminate may be two in this example, but it may be one, or three or more.

In the present invention, it is preferable to reduce an amount of air remaining between the prepregs in the laminate as much as possible in order to prevent voids from being formed in the molded product and mechanical characteristics from deteriorating.

Examples of a method of reducing air in the laminate include a method of compressing a laminate in a flat mold and a method in which a laminate is covered with a bagging film and the inside of the bagging film is vacuum-degassed (hereinafter referred to as a "vacuum bag method"), and the vacuum bag method is preferable because air can be efficiently eliminated therewith.

### Process (ii):

Using the laminates obtained in Process (i), ends of the laminates are abutted so that side end surfaces come in contact with each other to form an assembly.

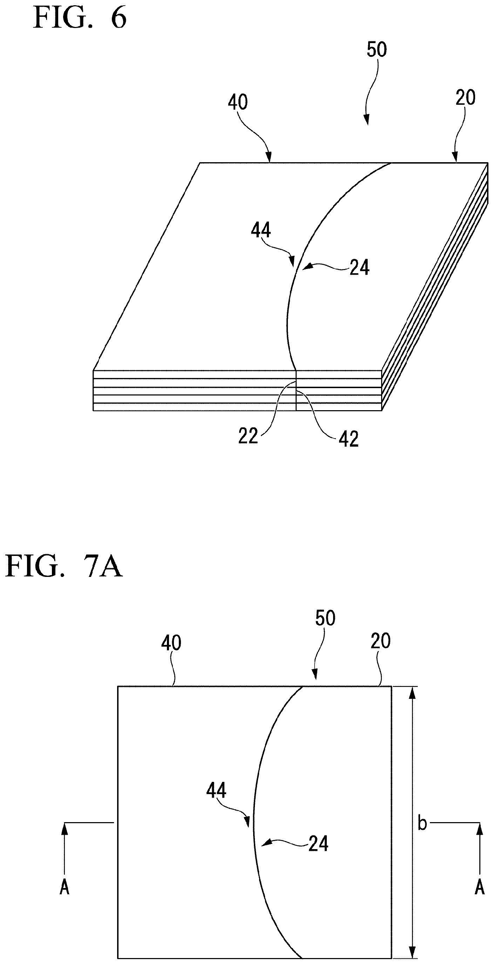

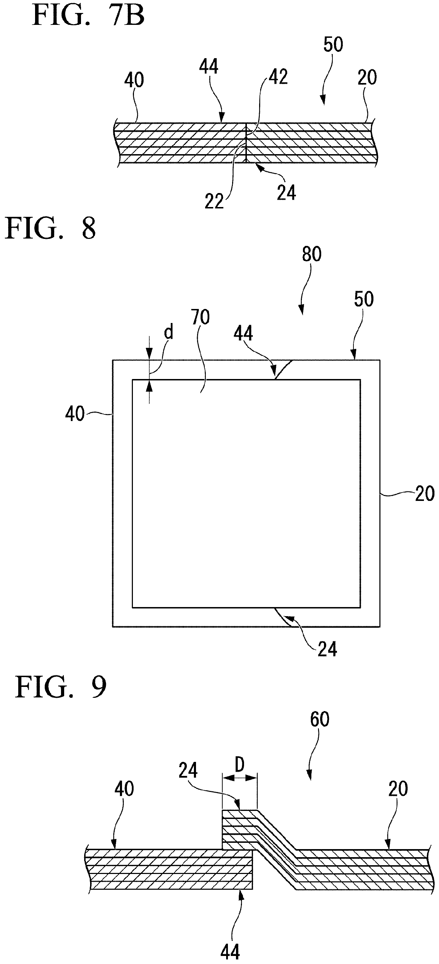

For example, as shown in Fig. 6 and Fig. 7, an end 24 on the side end surface 22 of the laminate 20 and an end 44 on the side end surface 42 of the laminate 40 are abutted so that the side end surface 22 of the laminate 20 and the side end surface 42 of the laminate 40 come in contact with each other to form an assembly 50. In this case, the side end surface 22 of the laminate 20 and the side end surface 42 of the laminate 40 are complementary to each other and thus adhere to each other.

When a length B 1 of the side a2 of the prepregs 10 and 10A is the same as a length B2 of the side a4 of the prepregs 30 and 30A, and a total of a distance L1 between the apex of the side a1 and the side a2 and a distance L2 between the apex of the side a3 and the side a4 matches the length B 1 and the length B2, the shape of the assembly 50 in a plan view is a square shape.

In the present invention, when the shape of the side end surface of the abutting end of an adjacent laminate in a plan view is an arc shape, the diameter R of the arc and a distance b (mm) between ends positioned on both end sides of the arc on the side end surface in the assembly preferably satisfy the relationship of R/b≥1. Thereby, meandering of reinforcing fibers is easily restricted, and a molded product having excellent appearance and mechanical characteristics is easily obtained.

R/b is preferably 1 or more, more preferably 1 to 10, and most preferably 1 to 3. When R/b is set to be within the above range, it is possible to restrict meandering of reinforcing fibers.

For example, in the case of the assembly 50, as shown in Fig. 7A, the distance b between ends positioned on both end sides of the arc of the side end surfaces 22 and 42 of the laminates 20 and 40 in the assembly 50 matches a distance between the side b1 and the side b2 in the prepregs 10 and 10A and a distance between the side b3 and the side b4 in the prepregs 30 and 30A. That is, the distance b in the assembly 50 matches the length B 1 of the side a2 of the prepregs 10 and 10A and the length B2 of the side a4 of the prepregs 30 and 30A. The case of an assembly 50 to be described below is similar to the case of the assembly 60.

### Process (iii):

An SMC is laminated on an abutment part of ends of the laminate of the assembly obtained in Process (ii) to form a composite laminate. For example, as shown in Fig. 8, an SMC 70 is laminated on an abutment part of the end 24 of the laminate 20 and the end 44 of the laminate 40 in the assembly 50 to form a composite laminate 80.

A form in which an assembly and an SMC are laminated is not particularly limited, and an SMC may be laminated only on one surface of an assembly or an SMC may be laminated on both surfaces of an assembly. In addition, when an SMC is laminated only on one surface of an assembly, the SMC may be laminated on the upper surface of the assembly, or the SMC may be laminated on the bottom surface of the assembly. However, in consideration of maintaining the shape, the SMC is preferably laminated on the upper surface of the laminate.

The shapes of the assembly and SMC to be laminated in a plan view may be appropriately designed according to the shape of a desired molded product, and the shapes may be the same, similar to each other, or different from each other. The shape similar to that of the assembly to be laminated is preferable in consideration of quality stability of a finished molded product.

The SMC is a sheet-like molding material containing short fibers (hereinafter referred to as "discontinuous reinforcing fibers") including reinforcing fibers and a matrix resin composition. Specifically, for example, an SMC in which a matrix resin composition is impregnated into a reinforcing fiber sheet formed when short fibers including reinforcing fibers are dispersed so that the fiber direction becomes random is used.

Short fibers refer to reinforcing fibers having a fiber length of 100 mm or less, and reinforcing fibers having a fiber length of 10 to 30 mm are preferable.

Examples of the reinforcing fibers and the matrix resin composition used for the SMC include the same ones as in the prepreg. Regarding reinforcing fibers used for the SMC, carbon fibers are preferable because they have excellent specific strength and specific elasticity. Regarding the matrix resin composition used for the SMC, a resin composition containing a vinyl ester resin is suitably used because it has excellent moldability and the like, and a resin composition containing an epoxy resin can be used because the strength after curing can be increased.

As described above, in the method of producing a composite laminate according to the first aspect of in the present invention, when ends of a plurality of prepregs or prepreg laminates are abutted so that side end surfaces come in contact with each other to form an assembly, side end surfaces of abutting ends of adjacent prepregs or a laminate thereof can be curved surfaces which have a curved shape in a plan view and are complementary to each other. Accordingly, when a composite laminate in which an SMC is laminated on an assembly is compressed and molded to form a molded product, since meandering of reinforcing fibers is restricted in the cured part of the prepreg, it is possible to obtain a molded product having excellent appearance and mechanical characteristics.

Although the reason why meandering of reinforcing fibers can be restricted in the cured part of the prepreg according to the method of producing a composite laminate according to the first aspect of the present invention is not clearly understood, the reason is speculated as follows.

When a composite laminate is molded, the viscosity of the matrix resin composition of the SMC decreases due to heat during molding, and the SMC flows. It is thought that, when side end surfaces of abutting ends of adjacent laminates in the assembly are flat surfaces having a shape that is linear in a plan view, stress due to flowing of the SMC is concentrated in the part in which the laminate of the assembly is abutted, and reinforcing fibers in the prepreg are easily meandered.

On the other hand, in the present invention, when side end surfaces of abutting ends of adjacent laminates in the assembly are made curved surfaces which have a curved shape in a plan view and are complementary to each other, it is possible to make it difficult to concentrate stress due to flowing of the SMC in the part in which the laminate is abutted. Therefore, it is thought that meandering of reinforcing fibers in the prepreg can be restricted.

Here, the method of producing a composite laminate according to the first aspect of the present invention is not limited to the above method. For example, in the first aspect of the present invention, complementary steps that mesh with each other may be formed on side end surfaces of abutting ends of laminates which form an assembly.

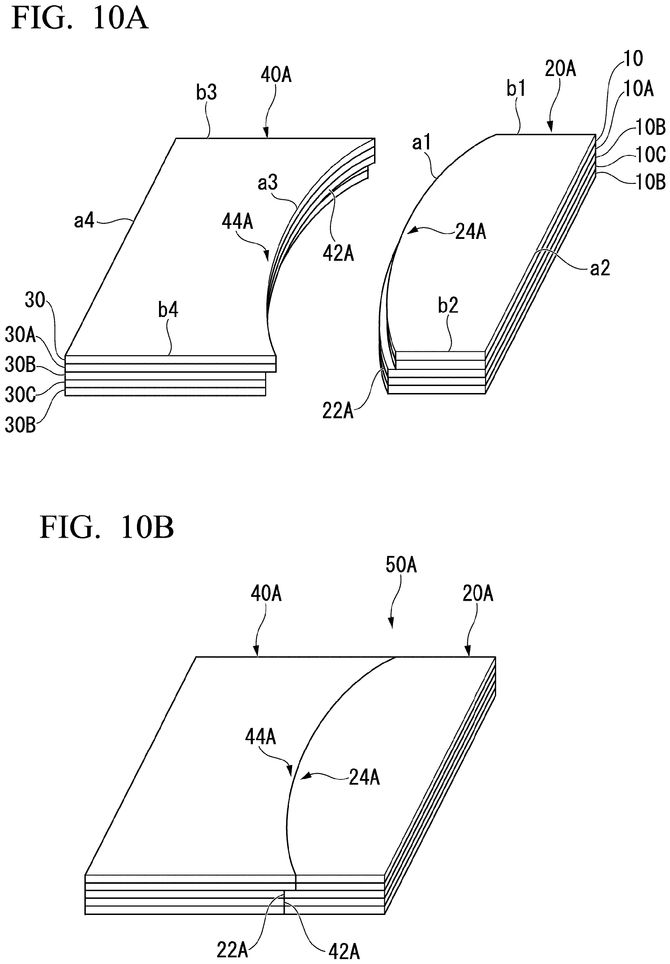

Specifically, for example, a method of combining a laminate 20A and a laminate 40A exemplified in Fig. 10A and forming an assembly 50A exemplified in Fig. 10B may be exemplified.

In the laminate 20A, in addition to the prepregs 10 and 10A, a prepreg 10B the same as the prepreg 10 except that the distance L1 is longer than that of the prepreg 10 and a prepreg 10C the same as the prepreg 10A except that the distance L1 is longer than that of the prepreg 10A are used. The prepregs 10 and 10A to 10C are laminated in a lamination structure of the prepreg 10B/the prepreg 10C/the prepreg 10B/the prepreg 10A/the prepreg 10 from the bottom to form the laminate 20A. Accordingly, a step of which the lower side protrudes is formed on a side end surface 22A of the laminate 20A.

In the laminate 40A, in addition to the prepregs 30 and 30A, a prepreg 30B the same as the prepreg 30 except that the distance L2 is shorter than that of the prepreg 30 and a prepreg 30C the same as the prepreg 30A except that the distance L2 is shorter than that of the prepreg 30A are used. The prepregs 30 and 30A to 30C are laminated in a lamination structure of the prepreg 30B/the prepreg 30C/the prepreg 30B/the prepreg 30A/the prepreg 30 from the bottom to form the laminate 40A. Accordingly, a step of which the upper side protrudes is formed on a side end surface 42A of the laminate 40A.

Respective steps of the side end surface 22A of the laminate 20A and the side end surface 42A of the laminate 40A have complementary shapes that mesh with each other. In the assembly 50A, an end 24A of the laminate 20A and an end 44A of the laminate 40A are abutted and combined so that the side end surface 22A of the laminate 20A and the side end surface 42A of the laminate 40A come in contact with each other.

As in the assembly 50A, even if steps are formed on side end surfaces of ends in which adjacent laminates are combined, when these side end surfaces are made curved surfaces which have a curved shape in a plan view and are complementary to each other, meandering of reinforcing fibers in the cured part of the prepreg is restricted, and a molded product having excellent appearance and mechanical characteristics is obtained.

The method of producing a composite laminate according to the first aspect of in the present invention is not limited to a method in which ends of two laminates are abutted to form an assembly, and if the above conditions are satisfied in respective abutment parts, a method in which ends of three or more laminates are abutted to form an assembly may be used.

### (Second aspect)

A method of producing a composite laminate according to a second aspect of the present invention is a method in which ends are abutted after a prepreg or a prepreg laminate is pre-molded in a method of producing a complex according to the first aspect (a pre-molded prepreg or prepreg laminate is referred to as a "preform"). That is, the method of producing a composite laminate according to the second aspect of the present invention is a method in which ends of a plurality of preforms in which a sheet-like prepreg or a prepreg laminate is pre-molded are abutted so that side end surfaces come in contact with each other to form an assembly, an SMC is laminated on a part in which the end of the assembly is abutted in an overlapping manner, and thereby a composite laminate is obtained. In the method of producing a composite laminate according to the second aspect of the present invention, as in the method of producing a composite laminate according to the first aspect of the present invention, the 3D shape of a desired molded product is divided into several parts, preforms are separately produced for respective parts, these preforms are combined to form an assembly, an SMC is laminated, and thereby a composite laminate is obtained. It is possible to produce a molded product having a complex 3D shape using such a composite laminate.

In the method of producing a composite laminate according to the second aspect of in the present invention, side end surfaces of abutting ends of adjacent preforms are preferably curved surfaces which have a curved shape in a plan view and are complementary to each other.

The method of producing a composite laminate according to the second aspect of the present invention can be performed in the same manner as in the first aspect except that a prepreg or prepreg laminate is pre-molded to form a preform and an assembly is then formed in the method of producing a composite laminate according to the first aspect of the present invention.

The shape of the preform is not particularly limited, and can be set according to the shape of a desired molded product. The shape of the preform may be a shape of a curved surface (including a combination of a plurality of planes) that is not a developable surface causing shear deformation in layers during molding from a flat laminate, that is, it may be a three-dimensional curved surface shape or may be a curved surface shape that can be developed in a flat surface to be molded by bending without shear deformation. The method of producing a composite laminate according to the second aspect of the present invention is particularly effective when the preform has a three-dimensional curved surface shape.

Examples of a method of forming a preform include a method in which a laminate is manually attached so that it is pressed against a mold for pre-molding, a method in which a laminate is disposed in a mold, a rubber film or the like is disposed from the top, and the inside of the rubber film or the like is then evacuated, and the laminate is compressed in the molding die for pre-molding, and a method in which molds including male and female molds are installed in a simple molding machine, and a laminate is disposed between the open male and female molds, and compressed by the male and female molds for pre-molding. Here, male and female molds refer to a pair of molds in which one convex part or concave part corresponds to the other concave part or convex part.

Regarding a method of forming a preform, a method in which a laminate is compressed between male and female molds for pre-molding is preferable because molding is possible in a short time.

The material of the mold is not particularly limited, and examples thereof include a metal and chemical wood. Chemical wood is preferable because it is inexpensive and easy to process.

During pre-molding, as necessary, it is preferable to heat a laminate so that the laminate can be softened. Examples of a method of heating a laminate include a hot-air method and an infrared method. The infrared method is preferable because a laminate can be heated rapidly.

According to a composite laminate obtained in the method of producing a composite laminate according to the second aspect of the present invention, as in the composite laminate obtained in the method of producing a composite laminate according to the first aspect of the present invention, since meandering of reinforcing fibers is restricted in the cured part of the prepreg during main molding, a molded product having excellent appearance and mechanical characteristics is obtained.

### (Third aspect)

A method of producing a composite laminate according to a third aspect of the present invention is a method in which an assembly having an overlapping part in which ends of sheet-like prepregs or a prepreg laminate overlap is formed, an SMC is laminated on the overlapping part in which ends of the assembly overlap in an overlapping manner, and thereby a composite laminate is obtained. In the method of producing a composite laminate according to the third aspect of the present invention, as in the method of producing a composite laminate according to the first aspect of the present invention, the 3D shape of a desired molded product is divided into several parts, prepregs or prepreg laminates are separately produced for respective parts, these prepregs or prepreg laminates are combined to form an assembly, an SMC is laminated, and thereby a composite laminate is obtained. It is possible to produce a molded product having a complex 3D shape using such a composite laminate.

In the method of producing a composite laminate according to the third aspect of in the present invention, side end surfaces of overlapping ends of adjacent laminates are preferably curved surfaces having a curved shape in a plan view.

In the method of producing a composite laminate according to the third aspect of the present invention, side end surfaces of overlapping ends of adjacent laminates need not necessarily be complementary to each other as long as they are curved surfaces having a curved shape in a plan view. In order to easily obtain a molded product having excellent appearance and mechanical characteristics, side end surfaces of overlapping ends of adjacent laminates are preferably curved surfaces which have a curved shape in a plan view and are complementary to each other.

The method of producing a composite laminate according to the third aspect of the present invention can be performed in the same manner as in the method of producing a composite laminate according to the first aspect of the present invention except that side end surfaces of overlapping ends of adjacent laminates need not necessarily be complementary to each other and ends overlap instead of abutting.

For example, as shown in Fig. 9, a method in which the laminate 20 and the laminate 40 are formed, the end 24 of the laminate 20 and the end 44 of the laminate 40 overlap so that the assembly 60 is formed, and an SMC is laminated on a part in which the end 24 of the laminate 20 in the assembly 60 overlaps the end 44 of the laminate 40 may be exemplified.

When ends of the laminate overlap, the width D of the overlapping part can be appropriately set according to the size of a desired molded product and the like. The width D of the overlapping part is preferably 5 to 40 mm and more preferably 10 to 15 mm. When the width D is equal to or larger than a lower limit value in the above range, the laminate can overlap accurately. When the width D is equal to or less than an upper limit value in the above range, it is possible to maintain a degree of freedom of the shape of the molded product.

### (Fourth aspect)

A method of producing a composite laminate according to a fourth aspect of the present invention is a method in which a prepreg or a prepreg laminate in the method of producing a composite laminate according to the third aspect of the present invention is pre-molded and then ends overlap. That is, the method of producing a composite laminate according to the fourth aspect of the present invention is a method in which an assembly having an overlapping part in which ends of a plurality of preforms in which a sheet-like prepreg or a prepreg laminate is pre-molded overlap is formed, an SMC is laminated on an overlapping part in which ends of the assembly overlap in an overlapping manner, and thereby a composite laminate is obtained. In the method of producing a composite laminate according to the fourth aspect of the present invention, as in the method of producing a composite laminate according to the first aspect of the present invention, the 3D shape of a desired molded product is divided into several parts, preforms are separately produced for respective parts, these preforms are combined to form an assembly, an SMC is laminated, and thereby a composite laminate is obtained. It is possible to produce a molded product having a complex 3D shape using such a composite laminate.

In the method of producing a composite laminate according to the fourth aspect of in the present invention, side end surfaces of overlapping ends of adjacent preforms are preferably curved surfaces having a curved shape in a plan view.

The method of producing a composite laminate according to the fourth aspect of the present invention can be performed in the same manner as in the method of producing a composite laminate according to the third aspect of the present invention except that a prepreg or a prepreg laminate in the method of producing a composite laminate according to the third aspect of the present invention is pre-molded to form a preform and an assembly is then formed.

Examples of the shape of the preform and the method of forming a preform include those described in the method of producing a composite laminate according to the second aspect of the present invention, and preferable embodiments are also the same.

According to a composite laminate obtained in the method of producing a composite laminate according to the fourth aspect of the present invention in which side end surfaces of overlapping ends of adjacent preforms are curved surfaces having a curved shape in a plan view, like a composite laminate obtained in the method of producing a composite laminate according to the first aspect of the present invention in which side end surfaces of abutting ends of adjacent laminates in the assembly are curved surfaces which have a curved shape in a plan view and are complementary to each other, since meandering of reinforcing fibers is restricted in the cured part of the prepreg during main molding, a molded product having excellent appearance and mechanical characteristics is obtained.

### [Method of producing a fiber-reinforced composite material molded product]

The method of producing a fiber-reinforced composite material molded product according to the present invention is a method of obtaining a fiber-reinforced composite material molded product by compression molding a composite laminate produced in the method of producing a composite laminate of the present invention in a molding die. As the method of producing a fiber-reinforced composite material molded product according to the present invention, a known embodiment can be adopted, except that a composite laminate produced in the method of producing a composite laminate of the present invention is used.

For example, a composite laminate is disposed in a molding die, the composite laminate is cured by heating and pressing at a desired temperature and pressure using a press machine, and thereby a fiber-reinforced composite material molded product is obtained. Then, preferably, the temperature of the molding die is adjusted to a predetermined temperature, and after compression molding, a fiber-reinforced composite material molded product at the temperature is removed. Accordingly, since there is no need to raise or lower the temperature of the molding die, it is possible to improve the molding cycle and improve the productivity.

The molding temperature can be appropriately set according to a matrix resin composition to be used, and can be, for example, 130 to 150 °C.

The molding pressure can be appropriately set, and can be, for example, 3 to 10 MPa.

### [Fiber-reinforced composite material molded product]

The fiber-reinforced composite material molded product of the present invention is a fiber-reinforced composite material molded product in which a fiber-reinforced resin molded article reinforced with continuous fibers forms at least one selected from the group consisting of an abutment part in which ends thereof are abutted so that they come in contact with each other and an overlapping part in which ends thereof overlap, and a fiber-reinforced resin molded article reinforced with discontinuous fibers is laminated on at least a part of one or both of the abutment part and the overlapping part. The fiber-reinforced composite material molded product of the present invention is reinforced with continuous fibers and discontinuous fibers so that it is possible to obtain a complex shape and excellent mechanical characteristic.

In addition, a fiber-reinforced composite material molded product of the present invention has an end of at least a part of one or both of the abutment part and the overlapping part with an arc shape in a plan view so that fiber meandering of continuous fibers is small. In addition, the meandering angle θ of continuous fibers on the surface of the fiber-reinforced resin molded article is 15 degrees or less, and preferably 10 degrees or less because particularly excellent appearance and mechanical characteristics are obtained.

The fiber-reinforced composite material molded product of the present invention is produced by the above method.

### [Examples]

While the present invention will be described below in detail with reference to examples, the present invention is not limited to the following description.

### [Raw material]

Prepreg sheet (A): A sheet-like UD prepreg in which an epoxy resin composition was impregnated into a reinforcing fiber sheet in which carbon fibers were aligned in one direction (commercially available from Mitsubishi Chemical Corporation, product name: TR368E250S).

Prepreg sheet (B): A sheet-like UD prepreg in which an epoxy resin composition was impregnated into a reinforcing fiber sheet in which carbon fibers were aligned in one direction (commercially available from Mitsubishi Chemical Corporation, product name: TR361E250S).

SMC (C): A sheet-like SMC in which a vinyl ester resin composition was impregnated into a reinforcing fiber sheet in which short fibers including carbon fibers were dispersed so that the fiber direction was random (commercially available from Mitsubishi Chemical Corporation, product name: STR120N131).

SMC (D): A sheet-like SMC in which a vinyl ester resin composition was impregnated into a reinforcing fiber sheet in which short fibers including carbon fibers were dispersed so that the fiber direction was random (commercially available from Mitsubishi Chemical Corporation, product name: STR101J129).

### [Example 1]

A laminate (E1) was produced according to the following procedures (1) to (3).

Procedure (1): As shown in Fig. 2A, the prepreg sheet (A) was cut into a shape in which one side of a rectangle in a plan view is convex in an arc shape to obtain a prepreg sheet (A1). The position of the apex of the arc-shaped side a1 in the prepreg sheet (A1) corresponded to the middle point on the side a2 that faced the side a1. The distance L1 between the apex of the side a1 and the side a2 was 90 mm, the length B 1 of the side a2 was 180 mm, and the diameter R of the arc of the side a1 was 1,800 mm. In addition, the fiber direction of reinforcing fibers was at 90° with respect to the length direction of the side a2.

Procedure (2): As shown in Fig. 2B, a prepreg sheet (A2) was obtained by performing cutting in the same manner as in the procedure (1) except that the fiber direction of reinforcing fibers was at 0° with respect to the length direction of the side a2.

Procedure (3): The prepreg sheet (A1) and the prepreg sheet (A2) were laminated in the order of [A1/A2/A1/A2/A1] from the bottom while aligning positions of four sides, and thereby a laminate shown in Fig. 3 was obtained. The laminate was placed on a flat surface and covered with a bagging film, and the inside of the bagging film was vacuum-degassed for 45 minutes, internal air in the laminate was removed, and thereby a laminate (E1) was obtained.

A laminate (E2) was produced according to the following procedures (4) to (6).

Procedure (4): As shown in Fig. 4A, the prepreg sheet (A) was cut into a shape in which one side of a rectangle in a plan view was concave in an arc shape to obtain a prepreg sheet (A3). The position of the apex of the arc-shaped side a3 in the prepreg sheet (A3) corresponded to the middle point on the side a4 that faced the side a3. The distance L2 between the apex of the side a3 and the side a4 was 90 mm, the length B2 of the side a4 was 180 mm, and the diameter R of the arc of the side a3 was 1,800 mm. In addition, the fiber direction of reinforcing fibers was at 90° with respect to the length direction of the side a4.

Procedure (5): As shown in Fig. 4B, a prepreg sheet (A4) was obtained by performing cutting in the same manner as in the procedure (1) except that the fiber direction of reinforcing fibers was at 0° with respect to the length direction of the side a4.

Procedure (6): The prepreg sheet (A3) and the prepreg sheet (A4) were laminated in the order of [A3/A4/A3/A4/A3] from the bottom while aligning positions of four sides, and thereby a laminate shown in Fig. 5 was obtained. The laminate was placed on a flat surface and covered with a bagging film, and the inside of the bagging film was vacuum-degassed for 45 minutes, internal air in the laminate was removed, and thereby a laminate (E2) was obtained.

A composite laminate (F1) was produced according to the following procedures (7) to (9).

Procedure (7): As shown in Fig. 6, Fig. 7(A) and Fig. 7(B), ends were abutted so that a side end surface as a convex curved surface of the laminate (E1) and a side end surface as a concave curved surface of the laminate (E2) were brought into contact with each other, and thereby an assembly (F1) was obtained. The distance b between ends on both end sides of the arcs of the side a1 and the side a3 in the assembly (F1) was the same as B1 and B2, and R/b was 10.

Procedure (8): The SMC (C) was cut into a rectangle with a length of 170 mm×a width of 170 mm to obtain an SMC (C1).

Procedure (9): As shown in Fig. 8, the SMC (C1) was laminated on a part in which ends of the laminate (E1) and the laminate (E2) in the assembly (F1) were abutted in an overlapping manner, and thereby a composite laminate (G1) was obtained. A position at which the SMC (C1) was laminated was a position at which the distance d between the edge of the SMC (C 1) and the edge of the assembly (F1) was 5 mm on four sides of the composite laminate (G1).

A molding die for compression molding for forming a molded product having a rib on one surface of a flat plate was heated at 140 °C, the composite laminate (G1) was put thereinto, the mold was closed, and heating and pressing were performed by performing pushing and pressing at a set pressure of 4 MPa, and leaving it for 5 minutes, and thereby a fiber-reinforced composite material molded product was obtained.

### [Example 2]

A composite laminate was produced in the same manner as in Example 1 except that the diameter R of the arc of the side a1 and the side a3 was 900 mm, and R/b was 5 in the assembly (F1), and thereby a fiber-reinforced composite material molded product was obtained.

### [Example 3]

A composite laminate was produced in the same manner as in Example 1 except that the diameter R of the arc of the side a1 and the side a3 was 360 mm, and R/b was 2 in the assembly (F1), and thereby a fiber-reinforced composite material molded product was obtained.

### [Example 4]

A composite laminate was produced in the same manner as in Example 1 except that the diameter R of the arc of the side a1 and the side a3 was 180 mm, and R/b was 1 in the assembly (F1), and thereby a fiber-reinforced composite material molded product was obtained.

### [Example 5]

Laminates (E1) and (E2) were produced in the same manner as in Example 1, and as shown in Fig. 9, a composite laminate was obtained in the same manner as in Example 1 except that the end on the side a1 of the laminate (E1) and the end on the side a3 of the laminate (E2) overlapped by 10 mm to form an assembly.

### [Example 6]

A laminate (E3) was produced according to the following procedures (a) to (c).

Procedure (a): A prepreg sheet (A5) was obtained in the same manner as in the procedure (1) except that the length L1 was 95 mm. In addition, a prepreg sheet (A6) was obtained in the same manner as in the procedure (2) except that the length L1 was 95 mm.

Procedure (b): A prepreg sheet (A7) was obtained in the same manner as in the procedure (1) except that the length L2 was 85 mm. In addition, a prepreg sheet (A8) was obtained in the same manner as in the procedure (2) except that the length L2 was 85 mm.

Procedure (c): The prepreg sheets (A5) to (A8) were laminated in the order of [A5/A6/A5/A7/A8] from the bottom while aligning the position of the side a2, and thereby a laminate (E3) was obtained. The laminate was placed on a flat surface and covered with a bagging film, and the inside of the bagging film was vacuum-degassed for 45 minutes, internal air in the laminate was removed, and thereby a laminate (E3) was obtained.

A laminate (E4) was produced according to the following procedures (d) to (f).

Procedure (d): A prepreg sheet (A9) was obtained in the same manner as in the procedure (4) except that the length L2 was 85 mm. In addition, a prepreg sheet (A10) was obtained in the same manner as in the procedure (5) except that the length L2 was 85 mm.

Procedure (e): A prepreg sheet (A11) was obtained in the same manner as in the procedure (4) except that the length L2 was 95 mm. In addition, a prepreg sheet (A12) was obtained in the same manner as in the procedure (5) except that the length L2 was 95 mm.

Procedure (f): The prepreg sheets (A9) to (A12) were laminated in the order of [A9/A10/A9/A11/A12] from the bottom while aligning the position of the side a4, and thereby a laminate (E4) was obtained. The laminate was placed on a flat surface and covered with a bagging film, and the inside of the bagging film was vacuum-degassed for 45 minutes, internal air in the laminate was removed, and thereby a laminate (E4) was obtained.

A composite laminate (F2) was produced according to the following procedures (g) to (h).

Procedure (g): As shown in Fig. 10(A) and Fig. 10(B), ends were abutted so that a side end surface as a convex curved surface having a step of the laminate (E3) and a side end surface as a concave curved surface having a step of the laminate (E4) were brought into contact with each other, and thereby an assembly (F2) was obtained. The distance b between ends on both end sides of the arc of the side a1 and the side a3 in the assembly (F2) was the same as B1 and B2, and R/b was 10.

Procedure (h): A composite laminate (G2) was obtained in the same manner as in the procedures (8) and (9) except that the assembly (F2) was used in place of the assembly (F1).

A fiber-reinforced composite material molded product was obtained in the same manner as in Example 1 except that the composite laminate (G2) was used in place of the composite laminate (G1).

### [Example 7]

A composite laminate was produced in the same manner as in Example 6 except that the SMC (D) was used in place of the SMC (C), and thereby a fiber-reinforced composite material molded product was obtained.

### [Example 8]

A composite laminate was produced in the same manner as in Example 6 except that the prepreg sheet (B) was used in place of the prepreg sheet (A), and thereby a fiber-reinforced composite material molded product was obtained.

### [Example 9]

A composite laminate was produced in the same manner as in Example 6 except that the prepreg sheet (B) was used in place of the prepreg sheet (A) and the SMC (D) was used in place of the SMC (C), and thereby a fiber-reinforced composite material molded product was obtained.

### [Example 10]

A composite laminate was produced in the same manner as in Example 6 except that the SMC (C1) was laminated on both surfaces of the assembly (F2), and thereby a fiber-reinforced composite material molded product was obtained.

### [Comparative Example 11]

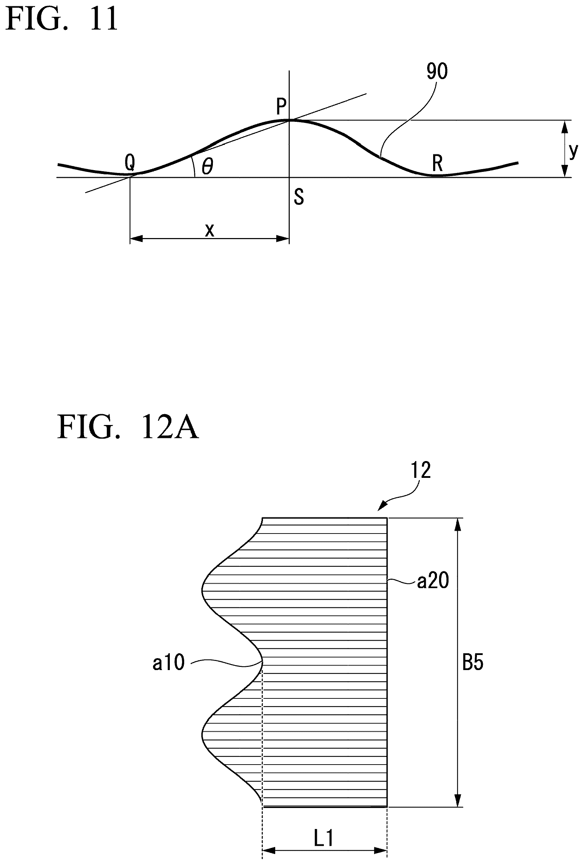

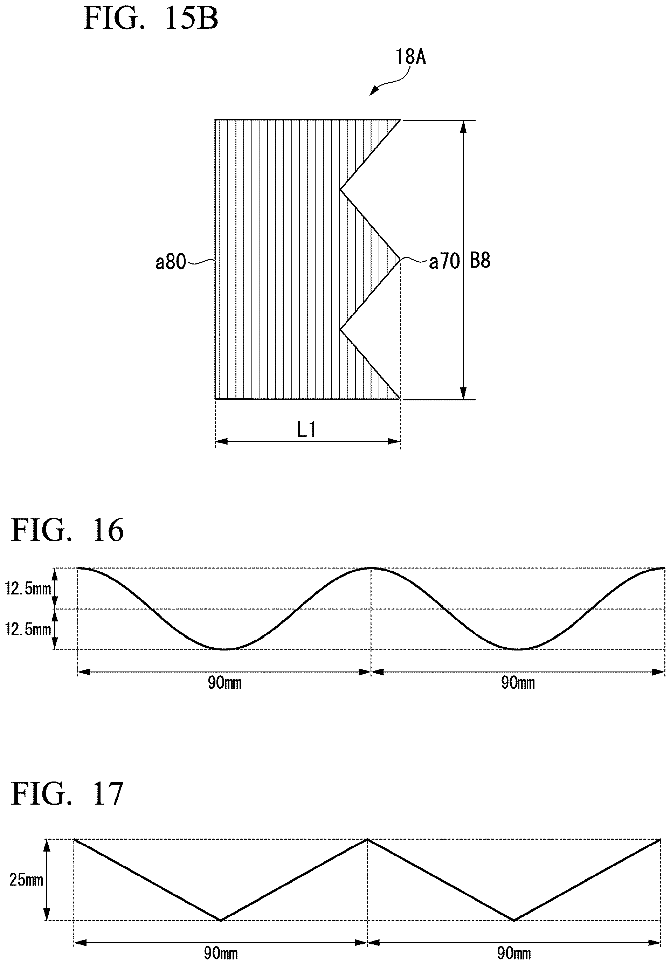

Procedure (1): As shown in Fig. 12A, the prepreg sheet (A) was cut into a sine wave shape in which one side of a rectangle in a plan view was as shown in Fig. 16 to obtain a prepreg sheet (A13). The position of the bottom of a sine wave side a10 in the prepreg sheet (A13) corresponded to the middle point on a side a20 that faced the side a10. The distance L1 between the bottom of the side a10 and the side a20 was 90 mm, the length B5 of the side a2 was 180 mm, and the sine wave of the side a10 was shown in the formula "W=12.5 mm and T=90 mm when height (H)=width (W)sin2π/period (T)" in Fig. 16. In addition, the fiber direction of reinforcing fibers was at 90° with respect to the length direction of the side a20.

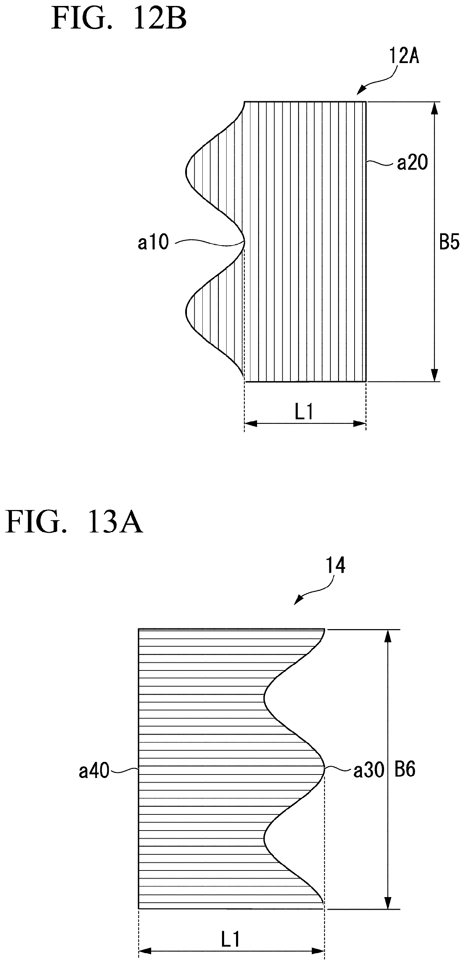

Procedure (2): As shown in Fig. 12B, a prepreg sheet (A14) was obtained by performing cutting in the same manner as in the procedure (1) except that the fiber direction of reinforcing fibers was at 0° with respect to the length direction of the side a20.

Procedure (3): The prepreg sheet (A13) and the prepreg sheet (A14) were laminated in the order of [A13/A14/A13/A14/A13] from the bottom while aligning positions of four sides. The laminate was placed on a flat surface and covered with a bagging film, and the inside of the bagging film was vacuum-degassed for 45 minutes, internal air in the laminate was removed, and thereby a laminate was obtained.

Procedure (4): As shown in Fig. 13A, the prepreg sheet (A) was cut into a sine wave shape in which one side of a rectangle in a plan view was as shown in Fig. 16 to obtain a prepreg sheet (A15). The position of the apex of the top of the sine wave side a30 in the prepreg sheet (A15) corresponded to the middle point of the side a30 that faced the side a40. The distance L1 between the apex of the side a30 and the side a40 was 115 mm, the length B6 of the side a30 was 180 mm, and the sine wave of the side a30 was shown in the formula "W=12.5 mm and T=90 mm when height (H)=width(W)sin2π/period (T)" in Fig. 16. In addition, the fiber direction of reinforcing fibers was at 90° with respect to the length direction of the side a40.

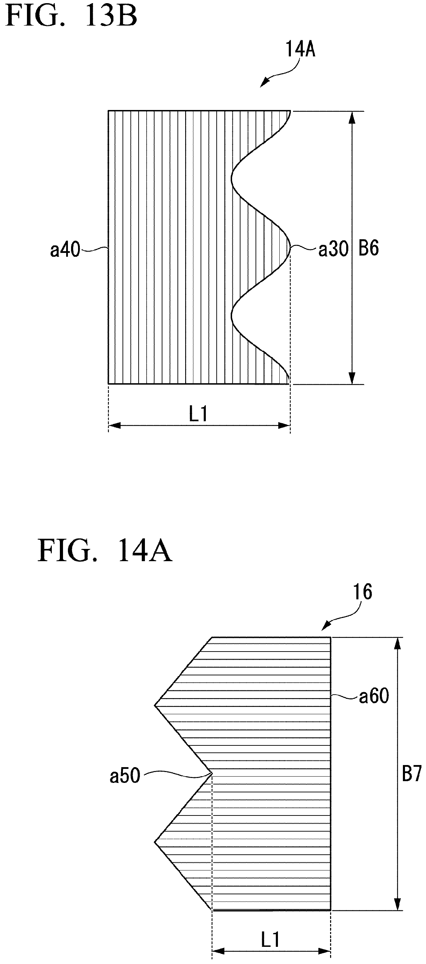

Procedure (5): As shown in Fig. 13B, a prepreg sheet (A16) was obtained by performing cutting in the same manner as in the procedure (1) except that the fiber direction of reinforcing fibers was at 0° with respect to the length direction of the side a40.

Procedure (6): The prepreg sheet (A15) and the prepreg sheet (A16) were laminated in the order of [A15/A16/A15/A16/A15] from the bottom while aligning positions of four sides. The laminate was placed on a flat surface and covered with a bagging film, and the inside of the bagging film was vacuum-degassed for 45 minutes, internal air in the laminate was removed, and thereby a laminate was obtained.

A composite laminate was produced in the same manner as in Example 1 except that the laminates obtained in the procedure (3) and the procedure (6) were used, and thereby a fiber-reinforced composite material molded product was obtained.

### [Comparative Example 12]

Procedure (1): As shown in Fig. 14A, the prepreg sheet (A) was cut into a jagged shape in which one side of a rectangle in a plan view was as shown in Fig. 17 to obtain a prepreg sheet (A17). The position of the bottom of a jagged side a50 in the prepreg sheet (A17) corresponded to the middle point on the side a50 that faced a side a60. The distance L1 between the bottom of the side a50 and the side a60 was 90 mm, the length B7 of the side a2 was 180 mm, and the jagged shape of the side a50 was as shown in Fig. 17. In addition, the fiber direction of reinforcing fibers was at 90° with respect to the length direction of the side a60.

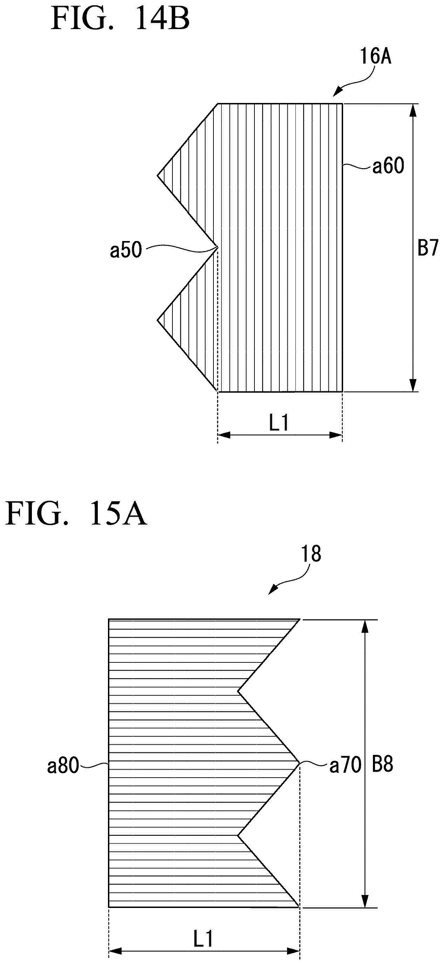

Procedure (2): As shown in Fig. 14B, a prepreg sheet (A18) was obtained by performing cutting in the same manner as in the procedure (1) except that the fiber direction of reinforcing fibers was at 0° with respect to the length direction of the side a60.

Procedure (3): The prepreg sheet (A17) and the prepreg sheet (A18) were laminated in the order of [A17/A18/A17/A18/A17] from the bottom while aligning positions of four sides. The laminate was placed on a flat surface and covered with a bagging film, and the inside of the bagging film was vacuum-degassed for 45 minutes, internal air in the laminate was removed, and thereby a laminate was obtained.

Procedure (4): As shown in Fig. 15A, the prepreg sheet (A) was cut into a jagged shape in which one side of a rectangle in a plan view was as shown in Fig. 17 to obtain a prepreg sheet (A19). The position of the apex of the top of the jagged side a70 in the prepreg sheet (A19) corresponded to the middle point on the side a70 that faced the side a80. The distance L1 between the apex of the side a70 and the side a80 was 90 mm, the length B8 of the side a70 was 180 mm, and the jagged shape of the side a70 was shown in Fig. 17. In addition, the fiber direction of reinforcing fibers was at 90° with respect to the length direction of the side a80.

Procedure (5): As shown in Fig. 15B, a prepreg sheet (A20) was obtained by performing cutting in the same manner as in the procedure (1) except that the fiber direction of reinforcing fibers was at 0° with respect to the length direction of the side a80.

Procedure (6): The prepreg sheet (A19) and the prepreg sheet (A20) were laminated in the order of [A19/A20/A19/A20/A19] from the bottom while aligning positions of four sides. The laminate was placed on a flat surface and covered with a bagging film, and the inside of the bagging film was vacuum-degassed for 45 minutes, internal air in the laminate was removed, and thereby a laminate was obtained.

A composite laminate was produced in the same manner as in Example 1 except that the laminates obtained in the procedure (3) and the procedure (6) were used, and thereby a fiber-reinforced composite material molded product was obtained.

### [Comparative Example 13]

An assembly (F3) was formed in the same method as in Example 1 except that the arc-shaped side a1 and side a3 in the prepreg sheets (A1) to (A4) were made linear, and the shape of the laminate to be combined in a plan view was a rectangular shape. A composite laminate was produced in the same manner as in Example 1 except that the assembly (F3) was used in place of the assembly (F1), and thereby a fiber-reinforced composite material molded product was obtained.

### [Comparative Example 14]

A composite laminate was produced in the same manner as in Example 5 except that the assembly (F3) was used in place of the assembly (F1), and thereby a fiber-reinforced composite material molded product was obtained.

### [Appearance (fiber meander) evaluation]

The appearances of the fiber-reinforced composite material molded products obtained in the examples were checked, and the meandering angle of a reinforcing fiber on the surface in the cured part of the prepreg was calculated according to the following method, and evaluated according to the following criteria.

### (Method of calculating meandering angle)

As shown in Fig. 11, the apex of the top part of a reinforcing fiber 90 which was meandering was set as P, valleys on both sides of the apex were set as Q and R, an intersection point between the line perpendicular from the apex P to the straight line QR and the straight line QR was set as S, and an angle formed by the straight line PQ and the straight line QR was set as θ. The length x of the straight line QS and the length y of the straight line PS were measured using a scaler or a ruler, the value of θ was calculated from tanθ=y/x, and θ was set as a meandering angle.

### (Evaluation criteria)

A: The meandering angle of the reinforcing fiber was 10° or less.
B: The meandering angle of the reinforcing fiber was larger than 10° and 15° or less.
C: The meandering angle of the reinforcing fiber was larger than 15° and 30° or less.
D: The meandering angle of the reinforcing fiber was larger than 30°.

Here, in Example 10, since it was difficult to evaluate fiber meandering in the cured part of the prepreg because an SMC was disposed on both surfaces of the assembly, fiber meandering in the cured part of the prepreg was evaluated after the cured part of the SMC in the molded product was scraped off. The results are shown in Table 1.

**[Table 1]**

| Examples | Prepreg | SMC | Lamination structure | Boundary edge shape | L1 | B1 | L2 | B2 | R | R/b | Combining method | Meandering angle θ | Appearance evaluation |
|---|---|---|---|---|---|---|---|---|---|---|---|---|---|
| | | | | | [mm] | [mm] | [mm] | [mm] | [mm] | | | [° ] | |
| 1 | A | C | F1/C1 | Arc shape | 90 | 180 | 90 | 180 | 1,800 | 10 | X | 15 | B |
| 2 | A | C | F1/C1 | Arc shape | 90 | 180 | 90 | 180 | 900 | 5 | X | 15 | B |
| 3 | A | C | F1/C1 | Arc shape | 90 | 180 | 90 | 180 | 360 | 2 | X | 10 | A |
| 4 | A | C | F1/C1 | Arc shape | 90 | 180 | 90 | 180 | 180 | 1 | X | 10 | A |
| 5 | A | C | F1/C1 | Arc shape | 90 | 180 | 90 | 180 | 1,800 | 10 | Y | 15 | B |
| 6 | A | C | F2/C1 | Arc shape | 90 | 180 | 90 | 180 | 1,800 | 10 | X | 15 | B |
| 7 | A | D | F2/C1 | Arc shape | 90 | 180 | 90 | 180 | 1,800 | 10 | X | 15 | B |
| 8 | B | C | F2/C1 | Arc shape | 90 | 180 | 90 | 180 | 1,800 | 10 | X | 15 | B |
| 9 | B | D | F2/C1 | Arc shape | 90 | 180 | 90 | 180 | 1,800 | 10 | X | 15 | B |
| 10 | A | C | C1/F2/C1 | Arc shape | 90 | 180 | 90 | 180 | 1,800 | 10 | X | 15 | B |
| 11 | A | C | F1/C1 | Sine curve | 90 | 180 | 90 | 180 | - | - | X | 30 | C |
| 12 | A | C | F1/C1 | Jagged shape | 90 | 180 | 90 | 180 | - | - | X | 20 | B |
| 13 | A | C | F3/C1 | Linear | 90 | 180 | 90 | 180 | - | - | X | 30 | C |
| 14 | A | C | F3/C1 | Linear | 90 | 180 | 90 | 180 | - | - | Y | 30 | C |

Here, in the table, in "combining method," "X" indicates that prepreg laminates were combined in an abutting manner, and "Y" indicates that prepreg laminate were combined in an overlapping manner.

All of Examples 1 to 10 produced in the production method of the present invention, and Comparative Examples 11 to 14, had excellent moldability and had a sufficient moldability at which molding of a complex shape was possible.

In addition, as shown in Table 1, in the fiber-reinforced composite material molded products of Examples 1 to 10 produced in the production method of the present invention, and Comparative Example 11, meandering of the reinforcing fiber was restricted and the appearance was excellent. In Comparative Examples 12 to 14 in which the edge shape of the abutting or overlapping end in the laminates was linear, the appearance was slightly inferior but it was a practicable appearance.

### [Reference Signs List]

10, 10A to 10C, 12, 12A, 14, 14A, 16, 16A, 18, 18A, 30, 30A to 30C Prepreg
20, 20A, 40, 40A Laminate
22, 22A, 42, 42A Side end surface
24, 24A, 44, 44AEnd
50, 50A, 60 Assembly
70 SMC
80 Composite laminate
100 Fiber-reinforced composite material molded product
110 Substrate
112 Boss
114 Rib

## Claims

1. A method of producing a composite laminate (80), comprising:
preparing an assembly (50, 50A, 60) having at least one of an abutment part in which a first end of a first sheet-like prepreg (10, 10A, 30, 30A) comprising reinforcing fibers (12, 32) which are continuous fibers and a second end of a second sheet-like prepreg (10, 10A, 30, 30A) comprising reinforcing fibers (12, 32) which are continuous fibers are abutted so that end surfaces of the first end and the second end come in contact with each other and an overlapping part in which a first end of a first sheet-like prepreg (10, 10A-10C, 30, 30A-30C) comprising reinforcing fibers (12, 32) which are continuous fibers and a second end of a second sheet-like prepreg (10, 10A-10C, 30, 30A-30C) comprising reinforcing fibers (12, 32) which are continuous fibers overlap so that the end surfaces of the first end and the second end face the opposite direction each other, and
**characterized in that** the method satisfies one of (i) and (ii):
(i) the assembly (50) has an abutment part, the method further comprising laminating a sheet molding compound (SMC) on the assembly (50) so that a first portion in which the sheet molding compound and the abutment part overlap is formed, and each of the edge shape of the first end of the first sheet-like prepreg (10, 10A, 30, 30A) and the edge shape of the second end of the second sheet-like prepreg (10, 10A, 30, 30A) in a plan view is an arc shape in the first portion, and
(ii) the assembly (50A, 60) has an overlapping part, the method further comprising laminating a sheet molding compound (SMC) on the assembly (50A, 60) so that a second portion in which the sheet molding compound and the overlapping part overlap is formed, and each of the edge shape of the first end of the first sheet-like prepreg (10, 10A-10C, 30, 30A-30C) and the edge shape of the second end of the second sheet-like prepreg (10, 10A-10C, 30, 30A-30C) in a plan view is an arc shape in the second portion.

2. The method of producing a composite laminate (80) according to claim 1,
wherein the assembly (50) has an abutment part, and the end surface of the first end of the first sheet-like prepreg (10, 10A, 30, 30A) and the end surface of the second end of the second sheet-like prepreg (10, 10A, 30, 30A) in the first portion are curved surfaces that are complementary to each other.

3. The method of producing a composite laminate (80) according to claim 1,
wherein the assembly (50A, 60) has an overlapping part, and the width of a part in which the first end of the first sheet-like prepreg (10, 10A-10C, 30, 30A-30C) and the second end of the second sheet-like prepreg (10, 10A-10C, 30, 30A-30C) overlap is 5 to 40 mm.

4. The method of producing a composite laminate (80) according to any one of claims 1 to 3,
wherein each of the edge shape of the first end of the first sheet-like prepreg (10, 10A, 10B, 10C, 30, 30A, 30B, 30C) and the edge shape of the second end of the second sheet-like prepreg (10, 10A, 10B, 10C, 30, 30A, 30B, 30C) in a plan view is an arc shape.

5. The method of producing a composite laminate (80) according to claim 4,
wherein the diameter R of the arc is 90 mm or more.

6. The method of producing a composite laminate (80) according to claim 5,
wherein the distance b (mm) between both ends of the arc and the diameter R satisfy the relationship of R/b≥1.

7. The method of producing a composite laminate (80) according to any one of claims 1 to 6,
wherein each of the first sheet-like prepreg (10, 10A, 10B, 10C, 30, 30A, 30B, 30C) and the second sheet-like prepreg (10, 10A, 10B, 10C, 30, 30A, 30B, 30C) is a laminate consisting of two or more sheet-like prepregs.

8. The method of producing a composite laminate (80) according to any one of claims 1 to 7,
wherein the preparation of the assembly (50, 50A, 60) is conducted by combining the first sheet-like prepreg (10, 10A, 10B, 10C, 30, 30A, 30B, 30C) and the second sheet-like prepreg (10, 10A, 10B, 10C, 30, 30A, 30B, 30C), after each of the first sheet-like prepreg (10, 10A, 10B, 10C, 30, 30A, 30B, 30C) and the second sheet-like prepreg (10, 10A, 10B, 10C, 30, 30A, 30B, 30C) is pre-molded.

9. The method of producing a composite laminate (80) according to any one of claims 1 to 8,
wherein, regarding each of the first sheet-like prepreg (10, 10A, 10B, 10C, 30, 30A, 30B, 30C) and the second sheet-like prepreg (10, 10A, 10B, 10C, 30, 30A, 30B, 30C), a UD prepreg in which reinforcing fibers are aligned in one direction is used.

10. The method of producing a composite laminate (80) according to any one of claims 1 to 9,
wherein, regarding each of the first sheet-like prepreg (10, 10A, 10B, 10C, 30, 30A, 30B, 30C) and the second sheet-like prepreg (10, 10A, 10B, 10C, 30, 30A, 30B, 30C), a cross prepreg in which reinforcing fiber are woven orthogonally is used.

11. A method of producing a fiber-reinforced composite material molded product (100), comprising
using the method of any of claims 1 to 10 to produce a composite laminate (80) and compression molding said composite laminate (80) in a molding die to obtain a fiber-reinforced composite material molded product (100).

12. A composite laminate (80) produced by the method of producing a composite laminate (80) according to any one of claims 1 to 10.

13. A fiber-reinforced composite material molded product (100) obtained by compression molding the composite laminate (80) according to claim 12 in a molding die.

## Patentansprüche

1. Verfahren zur Herstellung eines Verbundlaminats (80), umfassend:
Herstellen einer Anordnung (50, 50A, 60) mit mindestens einem von einem Angrenzungsteil, in dem ein erstes Ende eines ersten Sheet-artigen Prepregs (10, 10A, 30, 30A), das Verstärkungsfasern (12, 32) umfasst, die Endlosfasern sind, und ein zweites Ende eines zweiten Sheet-artigen Prepregs (10, 10A, 30, 30A), das Verstärkungsfasern (12, 32) umfasst, die Endlosfasern sind, aneinander angrenzen, so dass Endflächen des ersten Endes und des zweiten Endes miteinander in Kontakt kommen, und ein überlappender Teil, in dem sich ein erstes Ende eines ersten Sheet-artigen Prepregs (10, 10A-10C, 30, 30A-30C), das Verstärkungsfasern (12, 32) umfasst, die Endlosfasern sind, und ein zweites Ende eines zweiten Sheet-artigen Prepregs (10, 10A-10C, 30, 30A-30C), das Verstärkungsfasern (12, 32) umfasst, die Endlosfasern sind, überlappen, sodass die Endflächen des ersten Endes und des zweiten Endes in die entgegengesetzte Richtung weisen, und
**dadurch gekennzeichnet, dass** das Verfahren eines von (i) und (ii) erfüllt:
(i) die Anordnung (50) weist einen Angrenzungsteil auf, wobei das Verfahren weiter das Laminieren eines Sheet Molding Compound (SMC) auf die Anordnung (50) umfasst, so dass ein erster Abschnitt gebildet wird, in dem sich das Sheet Molding Compound und der Angrenzungsteil überlappen, und jeweils die Kantenform des ersten Endes des ersten Sheet-artigen Prepregs (10, 10A, 30, 30A) und die Kantenform des zweiten Endes des zweiten Sheet-artigen Prepregs (10, 10A, 30, 30A) in einer Draufsicht eine Bogenform in dem ersten Abschnitt ist, und
(ii) die Anordnung (50A, 60) weist einen überlappenden Teil auf, wobei das Verfahren weiter das Laminieren eines Sheet Molding Compound (SMC) auf die Anordnung (50A, 60) umfasst, so dass ein zweiter Abschnitt gebildet wird, in dem sich das Sheet Molding Compound (SMC) und der überlappende Teil überlappen, und jeweils die Kantenform des ersten Endes des ersten Sheet-artigen Prepregs (10, 10A-10C, 30, 30A-30C) und die Kantenform des zweiten Endes des zweiten Sheet-artigen Prepregs (10, 10A-10C, 30, 30A-30C) in einer Draufsicht eine Bogenform in dem zweiten Abschnitt ist.

2. Verfahren zur Herstellung eines Verbundlaminats (80) nach Anspruch 1,
wobei die Anordnung (50) einen Angrenzungsteil aufweist und die Endfläche des ersten Endes des ersten Sheet-artigen Prepregs (10, 10A, 30, 30A) und die Endfläche des zweiten Endes des zweiten Sheet-artigen Prepregs (10, 10A, 30, 30A) in dem ersten Abschnitt gekrümmte Flächen sind, die zueinander komplementär sind.

3. Verfahren zur Herstellung eines Verbundlaminats (80) nach Anspruch 1,
wobei die Anordnung (50A, 60) einen überlappenden Teil aufweist und die Breite eines Teils, in dem sich das erste Ende des ersten Sheet-artigen Prepregs (10, 10A-10C, 30, 30A-30C) und das zweite Ende des zweiten Sheet-artigen Prepregs (10, 10A-10C, 30, 30A-30C) überlappen, 5 bis 40 mm beträgt.

4. Verfahren zur Herstellung eines Verbundlaminats (80) nach einem der Ansprüche 1 bis 3,
wobei jeweils die Kantenform des ersten Endes des ersten Sheet-artigen Prepregs (10, 10A, 10B, 10C, 30, 30A, 30B, 30C) und die Kantenform des zweiten Endes des zweiten Sheet-artigen Prepregs (10, 10A, 10B, 10C, 30, 30A, 30B, 30C) in der Draufsicht eine Bogenform ist.

5. Verfahren zur Herstellung eines Verbundlaminats (80) nach Anspruch 4,
wobei der Durchmesser R des Bogens 90 mm oder mehr beträgt.

6. Verfahren zur Herstellung eines Verbundlaminats (80) nach Anspruch 5,
wobei der Abstand b (mm) zwischen beiden Enden des Bogens und der Durchmesser R die Beziehung R/b≥1 erfüllen.

7. Verfahren zur Herstellung eines Verbundlaminats (80) nach einem der Ansprüche 1 bis 6,
wobei jeweils das erste Sheet-artige Prepreg (10, 10A, 10B, 10C, 30, 30A, 30B, 30C) und das zweite Sheet-artige Prepreg (10, 10A, 10B, 10C, 30, 30A, 30B, 30C) ein Laminat ist, das aus zwei oder mehr Sheet-artigen Prepregs besteht.

8. Verfahren zur Herstellung eines Verbundlaminats (80) nach einem der Ansprüche 1 bis 7,
wobei die Herstellung der Anordnung (50, 50A, 60) durch Kombinieren des ersten Sheet-artigen Prepregs (10, 10A, 10B, 10C, 30, 30A, 30B, 30C) und des zweiten Sheet-artigen Prepregs (10, 10A, 10B, 10C, 30, 30A, 30B, 30C) durchgeführt wird, nachdem jeweils das erste Sheet-artige Prepreg (10, 10A, 10B, 10C, 30, 30A, 30B, 30C) und das zweite Sheet-artige Prepreg (10, 10A, 10B, 10C, 30, 30A, 30B, 30C) vorgeformt wurde.

9. Verfahren zur Herstellung eines Verbundlaminats (80) nach einem der Ansprüche 1 bis 8,
wobei in Bezug auf jeweils das erste Sheet-artige Prepreg (10, 10A, 10B, 10C, 30, 30A, 30B, 30C) und das zweite Sheet-artige Prepreg (10, 10A, 10B, 10C, 30, 30A, 30B, 30C) ein UD-Prepreg verwendet wird, in dem Verstärkungsfasern in einer Richtung ausgerichtet sind.

10. Verfahren zur Herstellung eines Verbundlaminats (80) nach einem der Ansprüche 1 bis 9,
wobei in Bezug auf jeweils das erste Sheet-artige Prepreg (10, 10A, 10B, 10C, 30, 30A, 30B, 30C) und das zweite Sheet-artige Prepreg (10, 10A, 10B, 10C, 30, 30A, 30B, 30C) ein Kreuz-Prepreg verwendet wird, in dem Verstärkungsfasern orthogonal gewebt sind.

11. Verfahren zur Herstellung eines geformten Produkts (100) aus faserverstärktem Verbundmaterial, bei dem
das Verfahren nach einem der Ansprüche 1 bis 10 verwendet wird, um ein Verbundlaminat (80) herzustellen, und das Verbundlaminat (80) in einem Formwerkzeug formgepresst wird, um ein geformtes Produkt (100) aus faserverstärktem Verbundmaterial zu erhalten.

12. Verbundlaminat (80), hergestellt durch das Verfahren zur Herstellung eines Verbundlaminats (80) nach einem der Ansprüche 1 bis 10.

13. Geformtes Produkt (100) aus faserverstärktem Verbundmaterial, das durch Formpressen des Verbundlaminats (80) nach Anspruch 12 in einem Formwerkzeug erhalten wird.

## Revendications

1. Procédé de production d'un stratifié composite (80), comprenant :
la préparation d'un ensemble (50, 50A, 60) présentant au moins une parmi une partie de butée dans laquelle une première extrémité d'un premier pré-imprégné (10, 10A, 30, 30A) de type feuille comprenant des fibres de renforcement (12, 32) qui sont des fibres continues et une seconde extrémité d'un second pré-imprégné (10, 10A, 30, 30A) de type feuille comprenant des fibres de renforcement (12, 32) qui sont des fibres continues viennent en butée de telle sorte que des surfaces d'extrémité de la première extrémité et de la seconde extrémité viennent en contact l'une avec l'autre et une partie de chevauchement dans laquelle une première extrémité d'un premier pré-imprégné (10, 10A-10C, 30, 30A-30C) de type feuille comprenant des fibres de renforcement (12, 32) qui sont des fibres continues et une seconde extrémité d'un second pré-imprégné (10, 10A-10C, 30, 30A-30C) de type feuille comprenant des fibres de renforcement (12, 32) qui sont des fibres continues se chevauchent de telle sorte que les surfaces d'extrémité de la première extrémité et de la seconde extrémité soient tournées dans la direction opposée l'une par rapport à l'autre, et
**caractérisé en ce que** le procédé satisfait un parmi (i) et (ii) :
(i) l'ensemble (50) présente une partie de butée, le procédé comprenant en outre la stratification d'un composé de moulage de feuille (SMC) sur l'ensemble (50) de telle sorte qu'une première portion dans laquelle le composé de moulage de feuille et la partie de butée se chevauchent soit formée, et chacune parmi la forme de bord de la première extrémité du premier pré-imprégné (10, 10A, 30, 30A) de type feuille et la forme de bord de la seconde extrémité du second pré-imprégné (10, 10A, 30, 30A) de type feuille, selon une vue en plan, est une forme arquée dans la première portion, et
(ii) l'ensemble (50A, 60) présente une partie de chevauchement, le procédé comprenant en outre la stratification d'un composé de moulage de feuille (SMC) sur l'ensemble (50A, 60) de telle sorte qu'une seconde portion dans laquelle le composé de moulage de feuille et la partie de chevauchement se chevauchent soit formée, et chacune parmi la forme de bord de la première extrémité du premier pré-imprégné (10, 10A-10C, 30, 30A-30C) de type feuille et de la forme de bord de la seconde extrémité du second pré-imprégné (10, 10A-10C, 30, 30A-30C) de type feuille, selon une vue en plan, est une forme arquée dans la seconde portion.

2. Procédé de production d'un stratifié composite (80) selon la revendication 1,
dans lequel l'ensemble (50) présente une partie de butée, et la surface d'extrémité de la première extrémité du premier pré-imprégné (10, 10A, 30, 30A) de type feuille et la surface d'extrémité de la seconde extrémité du second pré-imprégné (10, 10A, 30, 30A) de type feuille dans la première portion sont des surfaces incurvées qui sont complémentaires l'une à l'autre.

3. Procédé de production d'un stratifié composite (80) selon la revendication 1,
dans lequel l'ensemble (50A, 60) présente une partie de chevauchement, et la largeur d'une partie dans laquelle la première extrémité du premier pré-imprégné (10, 10A-10C, 30, 30A-30C) de type feuille et la seconde extrémité du second pré-imprégné (10, 10A-10C, 30, 30A-30C) de type feuille se chevauchent fait de 5 à 40 mm.

4. Procédé de production d'un stratifié composite (80) selon l'une quelconque des revendications 1 à 3,
dans lequel chacune parmi la forme de bord de la première extrémité du premier pré-imprégné (10, 10A, 10B, 10C, 30, 30A, 30B, 30C) de type feuille et de la forme de bord de la seconde extrémité du second pré-imprégné (10, 10A, 10B, 10C, 30, 30A, 30B, 30C) de type feuille sur une vue en plan est une forme arquée.

5. Procédé de production d'un stratifié composite (80) selon la revendication 4,
dans lequel le diamètre R de l'arc est de 90 mm ou plus.

6. Procédé de production d'un stratifié composite (80) selon la revendication 5,
dans lequel la distance b (mm) entre les deux extrémités de l'arc et le diamètre R satisfont à la relation de R/b≥1.

7. Procédé de production d'un stratifié composite (80) selon l'une quelconque des revendications 1 à 6,
dans lequel chacun parmi le premier pré-imprégné (10, 10A, 10B, 10C, 30, 30A, 30B, 30C) de type feuille et le second pré-imprégné (10, 10A, 10B, 10C, 30, 30A, 30B, 30C) de type feuille est un stratifié consistant en deux pré-imprégnés de type feuille ou plus.

8. Procédé de production d'un stratifié composite (80) selon l'une quelconque des revendications 1 à 7,
dans lequel la préparation de l'ensemble (50, 50A, 60) est menée en combinant le premier pré-imprégné (10, 10A, 10B, 10C, 30, 30A, 30B, 30C) de type feuille et le second pré-imprégné (10, 10A, 10B, 10C, 30, 30A, 30B, 30C) de type feuille, après le pré-moulage de chacun parmi le premier pré-imprégné (10, 10A, 10B, 10C, 30, 30A, 30B, 30C) de type feuille et le second pré-imprégné (10, 10A, 10B, 10C, 30, 30A, 30B, 30C) de type feuille.

9. Procédé de production d'un stratifié composite (80) selon l'une quelconque des revendications 1 à 8,
dans lequel, concernant chacun parmi le premier pré-imprégné (10, 10A, 10B, 10C, 30, 30A, 30B, 30C) de type feuille et le second pré-imprégné (10, 10A, 10B, 10C, 30, 30A, 30B, 30C) de type feuille, un pré-imprégné UD dans lequel des fibres de renforcement sont alignées dans une direction est utilisé.

10. Procédé de production d'un stratifié composite (80) selon l'une quelconque des revendications 1 à 9,
dans lequel, concernant chacun parmi le premier pré-imprégné (10, 10A, 10B, 10C, 30, 30A, 30B, 30C) de type feuille et le second pré-imprégné (10, 10A, 10B, 10C, 30, 30A, 30B, 30C) de type feuille, un pré-imprégné croisé dans lequel des fibres de renforcement sont tissées orthogonalement est utilisé.

11. Procédé de production d'un produit moulé (100) en matériau composite renforcé par des fibres, comprenant
l'utilisation du procédé selon l'une quelconque des revendications 1 à 10 pour produire un stratifié composite (80) et le moulage par compression dudit stratifié composite (80) dans une matrice de moulage pour obtenir un produit moulé (100) en matériau composite renforcé par des fibres.

12. Stratifié composite (80) produit par le procédé de production d'un stratifié composite (80) selon l'une quelconque des revendications 1 à 10.

13. Produit moulé (100) en matériau composite renforcé par des fibres obtenu par le moulage par compression du stratifié composite (80) selon la revendication 12 dans une matrice de moulage.
